# FASCICULE DE BREVET EUROPEEN

(11) **EP 2 009 570 B1**
(45) Date de publication et mention de la délivrance du brevet: **03.11.2010**
(21) Numéro de dépôt: 08159276.8
(22) Date de dépôt: 27.06.2008
(51) Int. Cl.: G06F 21/00

(54) **Dispositif de mémorisation temporaire de données**
Vorrichtung zur vorübergehenden Speicherung von Daten
Device for temporarily storing data

(30) Priorité: 29.06.2007 FR 0704716
(43) Date de publication de la demande: 31.12.2008
(73) Titulaire: THALES, 92200 Neuilly sur Seine (FR)
(72) Inventeur: Breton, Sébastien, 92700 Colombes (FR); Alcouffe, Fabien, 92700 Colombes (FR); Weber, Eric, 95830 Cormeilles en Vexin (FR)
(74) Mandataire: Lucas, Laurent Jacques

(56) Documents cités:
- WO-A-00/11536
- US-A- 5 148 481
- US-A1- 2004 215 874

## Description

La présente invention concerne un dispositif de mémorisation temporaire de données. Elle s'applique notamment aux échanges de données entre plusieurs équipements informatiques, lorsqu'on souhaite limiter les risques de diffusion intempestive d'informations.

Un grand nombre d'échanges de données entre équipements informatiques est effectué via des supports de masse externes tels que, par exemple, des clés USB. D'une part, ce moyen d'échanges de données est souvent le plus efficace lorsqu'il s'agit de transférer des documents volumineux d'un ordinateur à un autre. D'autre part, des normes de sécurité (instructions ou directives ministérielles, par exemple) interdisent les connexions physiques entre équipements de niveaux de sécurité différents, rendant alors nécessaire l'utilisation des supports de stockage externes pour transférer des données.

Cependant, un problème de sécurité apparaît avec l'utilisation de ces supports de masse externes. En effet, même si un support de masse est employé pour effectuer un stockage temporaire destiné à un simple transfert, les données sont enregistrées sur ce support de manière persistante. Ainsi, en cas de perte ou de vol du support, les données sont récupérables par un tiers via une simple lecture. De plus, les utilisateurs tendent à sauvegarder de nombreux documents sur ce type de support, pourtant souvent dédié à une utilisation ponctuelle. Même en cas de suppression des fichiers de données, ceux-ci peuvent être récupérés grâce à un outillage spécifique puisque, généralement, seuls les pointeurs d'allocation mémoire sont détruits, les données demeurant, par ailleurs, intactes. La destruction complète des données est possible via l'utilisation de logiciels spécifiques, mais elle nécessite une grande rigueur de la part de l'utilisateur.

Une solution connue pour garantir une sécurité des informations contenues sur le support est de contrôler l'accès aux données par un mot de passe. Dans le cadre d'échanges de données au sein d'un groupe de travail via un support externe, il est alors nécessaire de définir un mot de passe commun aux utilisateurs du groupe de travail, afin que chacun d'entre eux puisse verrouiller ou déverrouiller l'accès aux données stockées. L'expérience montre que le mot de passe est rapidement connu d'un trop grand nombre d'utilisateurs, réduisant ainsi le niveau de sécurité des données. De plus, cette méthode ne garantit pas l'innocuité du support en cas de réutilisation. En effet, un programme malveillant, par exemple un virus, pourrait être placé sur le support lors d'un premier transfert. Certains supports de masse sont connus pour comporter un interrupteur externe permettant d'interdire l'écriture de données. Cependant, l'utilisation de ce type de protection requiert aussi une grande rigueur de la part de l'utilisateur.

La demande de brevet américaine référencée sous le numéro US2004/0215874 propose un système de stockage de données permettant de restreindre les possibilités de lecture de ces données. Toutefois, ce système n'est pas adapté au transfert sécurisé de données entre plusieurs équipements.

Un but de l'invention est de répondre à ces problèmes de sécurité en proposant un support adapté aux transferts de données. A cet effet, l'invention a pour objet un dispositif de mémorisation temporaire de données comportant des moyens de connexions à un équipement comprenant des données à charger ou à décharger, le dispositif étant **caractérisé en ce que** les données sont enregistrées sur une mémoire volatile, le dispositif comportant un module d'alimentation permettant de préserver l'état des données pendant une durée fixée Δt, une mémoire rémanente stockant un ou plusieurs automates d'états dont les étapes sont exécutées par des moyens de contrôle compris dans le dispositif, au moins un automate permettant l'activation du dispositif dans un mode parmi au moins deux disponibles : un mode « écriture seule » permettant l'écriture des données et interdisant la lecture de données sur la mémoire volatile, et un mode « lecture seule » permettant la lecture des données et interdisant l'écriture de données sur la mémoire volatile, les moyens de contrôle déclenchant un changement de mode automatiquement après la connexion du dispositif à un équipement, le mode dans lequel se trouve le dispositif étant testé : si le mode testé est le mode lecture seule, le mode écriture seule est activé.

Selon un mode de réalisation, les moyens de contrôle sont configurés de sorte que si le mode testé est le mode écriture seule, le mode lecture seule est activé.

Selon un mode de réalisation du dispositif dans lequel au moins un automate gère en plus un mode de lecture répétée, les moyens de contrôle sont configurés de sorte que si le mode testé est le mode écriture seule, le mode de lecture répétée est activé, et si le mode testé est le mode de lecture répétée, le mode lecture répétée reste activé.

Selon un mode de réalisation, le dispositif comprend au moins un minuteur permettant, après l'écoulement d'une durée Δt, de désactiver l'alimentation de la mémoire volatile.

Selon un mode de réalisation, le dispositif peut comporter un bouton de réinitialisation permettant de désactiver le module d'alimentation sur simple action de l'utilisateur.

Selon un mode de réalisation, la mémoire rémanente est réinscriptible, la modification de son état mémoire permettant de paramétrer la configuration du dispositif.

Selon un mode de réalisation, les moyens de connexions comportent un connecteur USB.

L'invention a également pour objet un procédé de mise en oeuvre du dispositif décrit plus haut, au moins un automate comportant au moins les étapes suivantes :
■ le module d'alimentation est mis en charge après la connexion du dispositif à un équipement ;
■ le mode dans lequel se trouve le dispositif est testé ;
■ si le mode testé est le mode lecture, le mode écriture est activé ;
■ si le mode testé est le mode écriture, le mode lecture est activé ;
■ au cours du fonctionnement en mode écriture, le module d'alimentation de la mémoire volatile est activé,
■ au cours du fonctionnement en mode lecture, le module d'alimentation de la mémoire volatile est désactivé.

L'invention a également pour objet un procédé de mise en oeuvre du dispositif décrit plus haut, un moins un automate gérant en plus un mode de lecture répétée et comportant au moins les étapes suivantes :
■ le module d'alimentation est mis en charge après la connexion du dispositif à un équipement ;
■ le mode dans lequel se trouve le dispositif est testé ;
■ si le mode testé est le mode lecture, le mode écriture est activé ;
■ si le mode testé est le mode écriture, le mode de lecture répétée est activé ;
■ si le mode testé est le mode de lecture répétée, le mode lecture répétée reste activé ;
■ au cours du fonctionnement en mode écriture, le module d'alimentation de la mémoire volatile est activé,

Le dispositif selon l'invention est, par exemple, réalisé pour avoir l'aspect d'une clé USB classique, conférant ainsi au dispositif des qualités ergonomiques. Par soucis de clarté, le dispositif décrit par la suite est une clé USB comportant les caractéristiques de l'invention, mais l'invention peut s'appliquer à tous types de supports de masse.

D'autres caractéristiques apparaîtront à la lecture de la description détaillée donnée à titre d'exemple et non limitative qui suit faite en regard de dessins annexés qui représentent :
- la figure 1, un exemple d'architecture d'une clé USB selon l'invention,
- la figure 2, un premier exemple d'automate permettant de gérer des cycles de lecture/écriture de la clé USB,
- la figure 3, une illustration d'un cycle d'utilisation d'une clé USB selon l'invention comportant l'automate décrit en figure 2,
- la figure 4, un deuxième exemple d'automate permettant de gérer un autre type de cycle de lecture/écriture de la clé USB,
- la figure 5, une illustration d'un cycle d'utilisation d'une clé USB selon l'invention comportant l'automate décrit en figure 4.

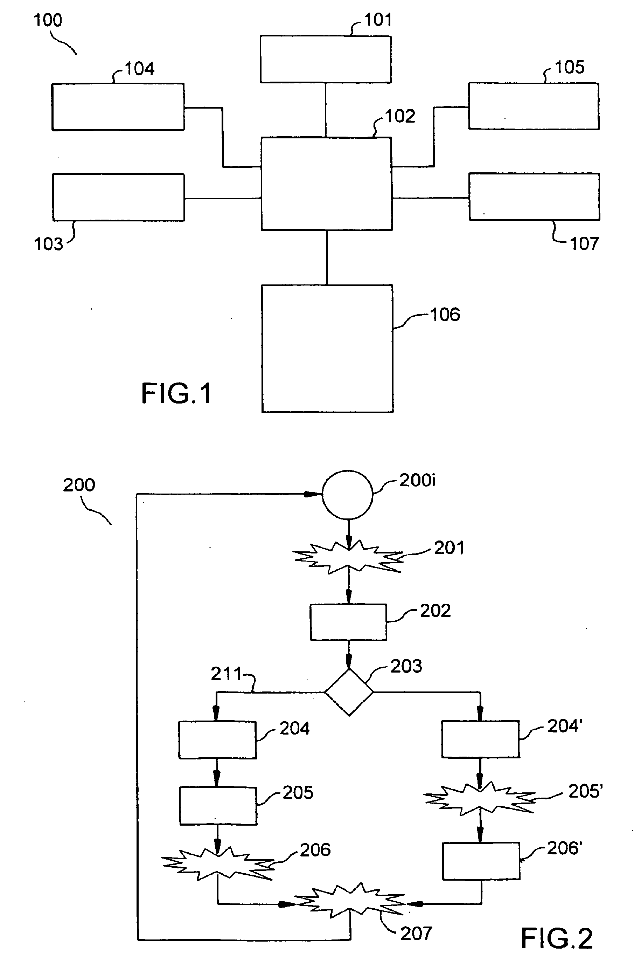

La figure 1 présente l'architecture d'un mode de réalisation d'une clé USB selon l'invention.

La clé USB 100 comporte un connecteur 101, un micro-contrôleur 102, un module de sélection 103 du mode d'alimentation électrique, une batterie 104, une mémoire rémanente 105, une première mémoire volatile 106 et une seconde mémoire volatile 107.

La mémoire rémanente 105 permet d'enregistrer des informations nécessaires au fonctionnement de la clé USB 100. Un ou plusieurs automates d'états peuvent notamment être stockés dans cette mémoire. Un automate définit une suite d'états correspondant à des situations dans lesquelles la clé USB 100 est successivement placée au cours de son utilisation. La mémoire rémanente 105 comporte, par exemple, un module de ROM, acronyme anglo-saxon pour « Read-Only Memory » ou, avantageusement, un module de mémoire flash, ce dernier type de mémoire étant réinscriptible. L'utilisation d'une mémoire flash comme mémoire rémanente 105 permet notamment d'envisager un paramétrage de l'automate d'états, ou encore, lorsque la clé comporte un minuteur, de configurer la durée de déclenchement de ce minuteur. Une modification de la configuration mémorisée par une mémoire rémanente 105 de type flash peut être réalisée à l'aide d'un logiciel spécifique.

La première mémoire volatile 106 permet l'enregistrement de données d'utilisateurs. La seconde mémoire volatile 107 est un espace de stockage temporaire utilisé pour stocker les données nécessaires au suivi des états pris par la clé USB 100, par exemple une variable indiquant l'état courant dans lequel se trouve la clé USB. L'état des données présentes sur ces mémoires volatiles 106, 107 est maintenu tant qu'une source d'énergie électrique les alimente. Dès que cette source d'énergie est inactivée, les données sont effacées. Un rôle de la première mémoire volatile 106 est donc de stocker temporairement des données enregistrées par un utilisateur. Les mémoires volatiles 106, 107 sont, par exemple, des modules de RAM, acronyme anglo-saxon signifiant « Random Access Memory ».

Selon un autre mode de réalisation, la clé USB 100 comporte une seule mémoire volatile comprenant deux zones d'adressage distinctes, la première zone étant dédiée aux données des utilisateurs, et la seconde étant utilisée pour stocker les données de suivi d'états de la clé USB 100.

La batterie 104 est notamment une source d'énergie temporaire pour les mémoires volatiles 106, 107. Elle permet donc de préserver l'état des données enregistrées sur ces mémoires 106, 107 pendant une durée fixée. La batterie 104 est, par exemple, une pile rechargeable ou un condensateur. La durée maximale souhaitée Δt de préservation des données peut être enregistrée dans la mémoire rémanente 105. Pour ne pas dépasser la durée Δt, la batterie 104 peut, par exemple, être dimensionnée spécifiquement pour se décharger après l'écoulement de cette durée. La batterie 104 peut également être associée à un minuteur, le minuteur permettant de déclencher la décharge de la batterie 104 après l'écoulement de la durée Δt.

Le micro-contrôleur 102 gère les états de la clé USB 100 à partir d'un automate d'états enregistré dans la mémoire rémanente 105 et des variables stockées dans la seconde mémoire volatile 107. Ainsi, il permet notamment de détecter les évènements permettant de passer d'un état à l'autre et de déclencher des actions, lorsqu'elles sont prévues par l'automate. Par exemple, le micro-contrôleur 102 active la charge de la batterie 104, court-circuite cette batterie pour la décharger, active ou désactive l'alimentation des mémoires volatiles 106, 107 par la batterie 104.

Le module de sélection 103 du mode d'alimentation modifie, par exemple sur ordre du micro-contrôleur 102, la source d'énergie alimentant les mémoires volatiles 106, 107. Dans le cas de la technologie USB, l'alimentation électrique des mémoires de masse externes est prévue. L'énergie électrique alimentant la clé USB 100 peut être, par exemple, fournie par l'équipement dans lequel elle est insérée. Ainsi, le module de sélection 103 permet, par exemple, de basculer entre un mode d'alimentation interne, tel que la batterie 104, et un mode d'alimentation externe provenant d'un dispositif sur lequel la clé USB 100 est connectée. Si le dispositif selon l'invention utilise une technologie ne prévoyant pas d'alimentation externe en énergie, le dispositif doit comporter une batterie 104 ou permettant une alimentation en énergie électrique sur une longue durée, telle qu'une pile lithium par exemple. La production d'énergie électrique par la pile interne est alors activée ou désactivée par le module de sélection 103 selon que les mémoires volatiles 106, 107 nécessitent une sauvegarde des données.

Le connecteur 101 est, dans l'exemple, un connecteur USB classique. Plus généralement, tous moyens de connexions à un équipement informatique ou à un autre équipement sont envisageables, y compris les connexions sans fil courte distance.

La figure 2 présente un premier exemple d'automate permettant de gérer des cycles de lecture/écriture d'une clé USB selon l'invention.

Dans l'exemple de la figure 2, l'automate 200 gère deux modes. Le premier mode W permet l'écriture de données sur la première mémoire volatile 106 mais interdit sa lecture. Le second mode R, au contraire, permet une lecture de cette mémoire volatile 106 mais interdit l'écriture de données. Par exemple, une variable S, présente sur la seconde mémoire volatile 107, enregistre la valeur R ou W correspondant au mode dans lequel se trouve la clé USB 100 à un moment donné.

A l'état initial 200i, la clé USB 100 est déconnectée de tout équipement. L'état initial 200i correspond à l'attente d'une insertion de la clé USB 100 dans un équipement. A ce stade, l'état de la variable S, présente dans la mémoire 107, indique le mode utilisé lors du dernier retrait de la clé USB 100 ou le mode par défaut lorsque la mémoire 107 n'est pas alimentée. Si par exemple, la clé USB 100 était en mode « écriture seule » lors de la dernière utilisation, la variable S est égale à la valeur W. Par défaut, en l'absence d'alimentation électrique des mémoires volatiles 106, 107, la clé USB 100 est en mode « lecture seule », la variable S étant alors égale à la valeur R.

Lors d'une première étape 201, l'automate 200 détecte la connexion de la clé USB 100 à un équipement, par exemple, son insertion dans un port USB d'un ordinateur personnel. Par exemple, le connecteur 101 détecte l'insertion de la clé USB 100, puis transmet un signal au micro-contrôleur 102.

Lors d'une deuxième étape 202, la mise en charge de la batterie 104 est déclenchée. Par exemple, l'énergie électrique fournie par un bloc d'alimentation d'ordinateur personnel permet de charger la batterie 104 dans un temps suffisamment court pour que, lors du retrait de la clé USB 100, souvent quelques secondes ou quelques minutes plus tard, la batterie 104 puisse se substituer à l'alimentation de l'ordinateur pour préserver les données présentes sur les mémoires volatiles 106, 107.

Lors d'une troisième étape 203, le mode dans lequel se trouve la clé USB 100 est testé. Dans l'exemple, deux branches distinctes 211, 212 apparaissent dans l'automate 200. La première branche 211 de l'automate 200 définit les étapes à exécuter lorsque la clé USB 100 est en mode « lecture seule » lors de son insertion dans l'équipement, c'est-à-dire lorsque le test de la variable S indique la valeur R. La seconde branche 212 concerne les étapes suivies par la clé USB 100 lorsque la clé USB 100 est en mode « écriture seule » lors de son insertion, la valeur W étant alors affectée à la variable S. La première branche 211 de l'automate 200 est d'abord détaillée ci-après.

Lors d'une quatrième étape 204, le mode de la clé USB 100 est changé, ce qui se traduit dans l'exemple, par la modification de la valeur de la variable S. Comme, dans la première branche 211, la variable S est initialement égale à la valeur R, la valeur W est affectée à la variable S. La clé USB 100 passe donc en mode « écriture seule ».

Lors d'une cinquième étape 205, le module de sélection 103 active la batterie 104 de manière à alimenter électriquement les mémoires volatiles 106, 107. La clé USB 100 est alors placée en attente de l'écriture de données 206. L'utilisateur peut alors écrire ses données, mais ne peut pas lire le contenu de la première mémoire volatile 106, évitant ainsi toute compromission de données sensibles. En outre, en cas de retrait inopiné de la clé USB 100, les données déjà écrites sur les mémoires volatiles 106, 107 sont préservées, puisque lesdites mémoires 106, 107 demeurent sous tension grâce à la batterie 104.

Enfin 207, la clé USB 100 est retirée de l'équipement et le micro-contrôleur 102 commande un retour à l'état initial 200i, complétant ainsi une boucle dans l'automate 200. Tant que la batterie 104 fournit de l'énergie électrique aux mémoires volatiles 106, 107, les données écrites sur la première mémoire volatile 106 sont préservées et l'état de la variable S est conservé à l'état W, marquant ainsi la clé USB 100 en mode écriture.

Si l'utilisateur n'insère pas la clé USB 100 dans un équipement avant la décharge totale de la batterie 104, alors les données présentes sur la première mémoire volatile 106 sont effacées automatiquement et la variable S, présente sur la seconde mémoire volatile 107, est réinitialisée à son état par défaut R. Dans le cas contraire, l'insertion de la clé USB 100 dans un équipement entraîne le passage dans la seconde branche 212 de l'automate 200. Les étapes de cette seconde branche 212 sont décrites ci-après.

Après avoir testé la valeur de la variable S, comme décrit plus haut dans la troisième étape 203, la clé USB 100 détecte le mode « écriture seule », état dans lequel la clé est restée, et change de mode à l'étape suivante 204'. La clé USB 100 passe donc en mode « lecture seule » en affectant la valeur R à la variable S.

Lors de l'étape suivante 205', l'utilisateur peut alors lire des données présentes sur la première mémoire volatile 106, mais il ne peut pas écrire sur cette mémoire. De cette manière, le mode « lecture seule » protège la clé USB 100 contre l'introduction de programmes malveillants.

L'étape suivante 206' concerne l'arrêt de l'alimentation des mémoires volatiles 106, 107. Le micro-contrôleur ordonne la désactivation de la batterie 104. Selon un autre mode de réalisation, cette étape 206' est placée avant l'étape de lecture des données 205', auquel cas, si un retrait inopiné de la clé USB 100 est effectué, les données sont préservées sur la première mémoire volatile 106 grâce à l'alimentation électrique externe, fournie par l'équipement.

Selon un autre mode de réalisation, et afin de renforcer la protection des données, une étape supplémentaire d'effacement sécurisé des données présentes sur la première mémoire volatile 106 est ajoutée après l'étape de lecture des données 205'. Cette étape n'est pas représentée sur la figure.

La dernière étape 207 est commune avec la première branche 211 de l'automate 200. Il s'agit du retrait de la clé USB 100, qui, dans le cas du mode « lecture seule », garantit l'effacement automatique et intégral de l'ensemble des données présentes sur les mémoires volatiles 106, 107. En effet, l'alimentation électrique des mémoires volatiles 106, 107 par la batterie 104 a été désactivée lors d'une étape précédente 206'.

L'ordre de certaines étapes de l'automate 200 peut être modifié. Par exemple, l'étape 204 d'activation du mode « écriture seule » peut être permutée avec l'étape 205 d'activation de l'alimentation électrique par la batterie 104. Selon un autre mode de réalisation, le mode par défaut indiqué par la variable S lorsque la clé USB 100 est hors tension, est le mode « écriture seule ».

Selon une variante de réalisation, le mode « écriture seule » est remplacé par un mode « écriture » dans lequel la lecture des données sur la clé USB 100 est autorisée. Cette variante présente l'avantage de permettre à l'utilisateur de vérifier les données qu'il a écrites sur la clé USB 100.

Selon une autre variante de réalisation, l'automate comporte une étape de notification de retrait de la clé USB 100, et c'est seulement sur cette notification, que le module d'alimentation 103 active la batterie 104 pour alimenter les mémoires volatiles 106, 107. L'utilisateur notifie le retrait, par exemple, via un logiciel présent sur l'équipement auquel est connectée la clé USB 100. Il peut ensuite retirer physiquement la clé USB 100 de l'équipement.

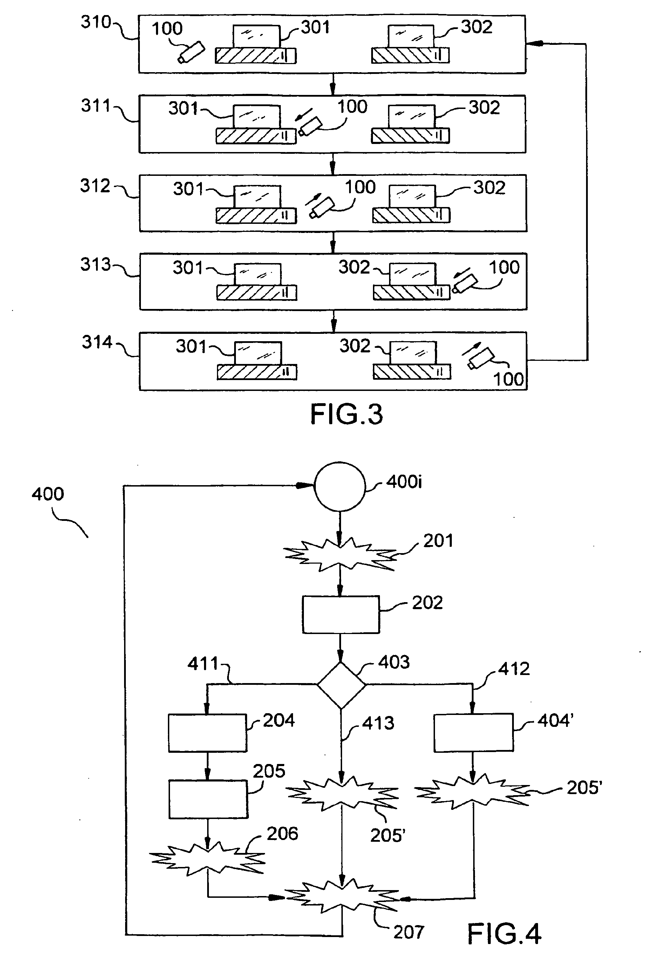

La figure 3 illustre un exemple de cycle d'utilisation d'une clé USB selon l'invention comportant l'automate décrit en figure 2. Un utilisateur souhaite transférer des données présentes sur un premier ordinateur personnel 301 vers un second ordinateur personnel 302. L'utilisateur utilise la clé USB 100 selon l'invention pourvue de l'automate 200 décrit en figure 2.

Initialement 310, la clé USB 100 est déconnectée, en mode « lecture seule », non alimentée par la batterie 104, et ne contient donc aucune donnée d'utilisateur.

Lors d'une première étape 311, l'utilisateur insère la clé USB 100 dans le premier ordinateur personnel 301. La clé USB 100 passe alors en mode « écriture seule » et la batterie 104 est mise en charge. La batterie 104 est également activée par le module de sélection du mode d'alimentation 103 pour alimenter les mémoires volatiles 106, 107. L'utilisateur transfère des données de ce premier ordinateur 301 vers la clé USB 100.

Lors d'une deuxième étape 312, l'utilisateur retire la clé USB 100 du premier ordinateur personnel 301. Tant que la batterie 104 n'est pas déchargée, les données que l'utilisateur a transférées sur la clé USB 100 sont préservées. L'autonomie de la batterie 104 est, par exemple, égale à quelques minutes ou quelques dizaines de minutes.

Lors d'une troisième étape 313, effectuée avant l'écoulement de la durée Δt correspondant, dans l'exemple, à la décharge de la batterie 104, l'utilisateur insère la clé USB 100 dans le second ordinateur personnel 302. La clé USB 100 passe alors en mode « lecture seule » et le module de sélection de l'alimentation 103 désactive la batterie 104. L'utilisateur copie les données de la clé USB 100 vers le second ordinateur personnel 302.

Lors d'une quatrième étape 314, l'utilisateur retire la clé USB 100 du second ordinateur personnel 302. L'alimentation des mémoires volatiles 106, 107 n'étant plus assurée par la batterie 104, l'intégralité des données est automatiquement effacée et un nouveau cycle d'écriture/lecture peut commencer.

L'automate 200 de la figure 2 est présenté à titre d'exemple non limitatif. Il peut notamment être remplacé par un automate gérant un plus grand nombre de modes comme l'illustre la figure 4.

La figure 4 présente un deuxième exemple d'automate permettant de gérer un autre type de cycle d'écriture/lecture d'une clé USB selon l'invention. Ce deuxième automate 400 gère un mode supplémentaire. Le premier mode géré est le mode « lecture seule » qui, par ailleurs, est choisi comme étant le mode par défaut après un effacement des mémoires volatiles 106, 107. Le second mode géré est le mode « écriture seule », et le troisième mode géré est une « lecture seule répétée».

Les premières étapes du deuxième automate 400, communes aux trois modes, sont les mêmes que celles du premier automate 200 de la figure 2. Ainsi, la première étape 201 d'insertion de la clé USB 100 dans un équipement est suivie par une étape 202 de mise en charge de la batterie 104.

Ensuite, une étape de test 403 permet de connaître le mode dans lequel se trouve la clé USB 100. A ce stade de l'automate 400, l'ajout du mode supplémentaire « lecture seule répétée » se traduit notamment par la présence d'une branche supplémentaire par rapport au premier automate 200.

La première branche 411 de l'automate correspondant au mode « lecture seule » comporte, dans cet exemple, les mêmes étapes que celle du premier automate 200.

La deuxième branche 412 correspondant au mode « écriture seule » comporte une étape de changement de mode 404', une étape de lecture des données 205', et une étape 207 de déconnexion de la clé USB 100 du dispositif. Tandis que dans le premier automate 200, le mode « écriture seule » était remplacé par le mode « lecture seule », dans le deuxième automate 400, le mode « écriture seule » est remplacé par le mode « lecture seule répétée ». L'étape 206' de mise hors tension des mémoires volatiles 106, 107 n'est pas exécutée dans ce mode.

Enfin, la troisième branche 413 correspond au mode « lecture seule répétée ». Dans l'exemple, ce mode se traduit par l'exécution d'une étape de lecture des données 205' et d'une étape 207 de déconnexion de la clé USB 100 du dispositif. L'étape 404' de remplacement du mode « écriture seule » par le mode « lecture seule répétée » et l'étape 206' de mise hors tension des mémoires volatiles 106, 107 ne sont pas exécutées dans ce mode. Ainsi, lorsque l'automate 400 entre dans le mode « lecture seule répétée », aucune étape ne le fait changer de mode. La variable S stockant le mode en cours étant, dans l'exemple, enregistrée sur la seconde mémoire volatile 107, l'automate reste dans le mode « lecture seule répétée » tant que la seconde mémoire volatile 107 est alimentée. La sortie de ce mode « lecture seule répétée » peut donc notamment survenir lorsque la batterie 104 est totalement déchargée, la variable S étant alors automatiquement réinitialisée du fait de l'arrêt de l'alimentation de la seconde mémoire volatile 107.

Selon une variante de réalisation, la clé USB 100 comporte un minuteur, non représenté sur les figures. Une fois la batterie 104 activée, le minuteur déclenche, après l'écoulement de la durée Δt, la mise hors tension des mémoires volatiles 106, 107, et ainsi le retour à l'état initial de la clé USB 100. Le minuteur peut être contrôlé par le micro-contrôleur 102. Lorsque la durée Δt est atteinte par le minuteur, celui-ci envoie, par exemple, un signal au micro-contrôleur 102 pour mettre hors tension les mémoires volatiles 106, 107.

Selon une autre variante de réalisation, la clé USB 100 comporte un bouton de réinitialisation, non représenté sur les figures. Le bouton de réinitialisation permet, par simple pression de l'utilisateur, d'ordonner une désactivation de la batterie 104. Ce bouton peut être activé à tout moment par l'utilisateur, notamment pour écourter le temps de mise hors tension, autrement dit, placer les mémoires volatiles 106, 107 hors tension avant l'écoulement de la durée Δt.

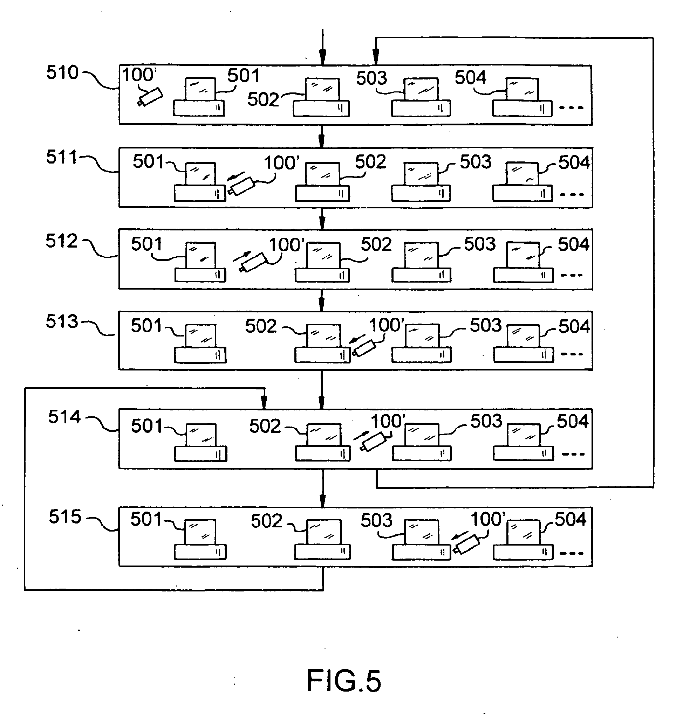

L'association du deuxième automate 400 avec au moins une des variantes de réalisation susmentionnées permet d'envisager un autre type d'utilisation pour les transferts de données, comme l'illustre la figure 5.

La figure 5 présente un deuxième exemple de cycle d'utilisation d'une clé USB selon l'invention. La clé USB 100' utilisée est une variante de réalisation comportant l'automate décrit en figure 4, un minuteur et un bouton de réinitialisation. Un utilisateur souhaite transférer des données d'un premier ordinateur 501 vers plusieurs autres postes informatiques 502, 503, 504.

Initialement 510, la clé USB 100' est déconnectée, en mode « lecture seule », non alimentée par la batterie 104, et ne contient donc aucune donnée d'utilisateur.

Lors d'une première étape 511, l'utilisateur insère la clé USB 100' dans le premier ordinateur 501. La clé USB 100', initialement en mode « lecture seule », passe en mode « écriture seule » lors de l'étape 204 de remplacement de mode du deuxième automate 400. Par ailleurs, la batterie 104 est activée pour une durée Δt. L'écriture étant autorisée, l'utilisateur écrit les données du premier ordinateur 501 sur la clé USB 100'.

Lors d'une seconde étape 512, l'utilisateur retire la clé USB 100'. Les données sont préservées sur la première mémoire volatile 106.

Lors d'une troisième étape 513, l'utilisateur insère la clé USB 100' dans un deuxième ordinateur 502. La clé USB 100' passe en mode « lecture seule répétée », lors de l'étape 404' de changement de mode du deuxième automate 400. La lecture étant autorisée, l'utilisateur peut alors copier les données de la clé USB 100' vers le deuxième ordinateur 502.

Lors d'une quatrième étape 514, l'utilisateur retire la clé USB 100'. Tant que la durée écoulée depuis l'activation de la batterie 104 est inférieure à Δt, les données sont préservées.

Lors d'une cinquième étape 515, l'utilisateur insère la clé USB 100' dans un troisième ordinateur 503. La clé reste alors en mode « lecture seule répétée ». L'utilisateur peut donc de nouveau copier les données présentes sur la clé USB 100' vers l'ordinateur auquel elle est connectée, à ce stade, vers le troisième ordinateur 503. Cependant, toute écriture sur la clé USB 100 est interdite.

Les quatrième et cinquième étapes sont répétées autant de fois que nécessaire pour copier les données sur chaque poste informatique, puis la clé USB 100' revient à son état initial 510 lorsque la durée Δt est écoulée ou avant, si l'utilisateur actionne le bouton de réinitialisation.

Selon une variante de réalisation apportant un gain de souplesse d'utilisation, mais moins sécurisée, le mode « lecture seule » et le mode « lecture seule répétée » sont remplacés respectivement par un mode « lecture » et par un mode « lecture répétée », ces modes permettant l'écriture de données.

Selon une autre variante de réalisation, la clé USB 100 comporte les deux automates 200, 400 décrit en figures 2 et 4. La clé USB 100 peut alors être utilisée selon deux modes opératoires différents. Un interrupteur accessible de l'utilisateur est par exemple ajouté sur la clé USB de manière à ce que l'utilisateur puisse choisir l'automate correspondant au mode d'utilisation préféré. Lorsqu'il souhaite effectuer un simple transfert entre deux ordinateurs, il place l'interrupteur dans une première position. C'est alors le premier automate 200 qui est sélectionné pour être exécuté par le micro-contrôleur 102. Lorsqu'il souhaite transférer les données d'un ordinateur sur plusieurs autres postes informatiques, l'utilisateur place l'interrupteur dans une seconde position, sélectionnant alors le deuxième automate 400. Dans tous les cas, les données sont enregistrées temporairement, limitant ainsi le risque de diffusion non souhaitée d'informations.

Un avantage du dispositif selon l'invention est que le contrôle d'accès en écriture ou en lecture est effectué automatiquement. En effet, les états du dispositif étant gérés par le micro-contrôleur 102, les utilisateurs n'ont pas à effectuer d'action particulière pour activer la protection. Ceci constitue un point fort de l'invention, car un grand nombre de failles de sécurité sont dues à la négligence des utilisateurs.

Un autre avantage du dispositif selon l'invention est qu'il permet le partage de son utilisation par plusieurs membres d'un groupe de travail, tout en limitant fortement les risques de diffusion non souhaitée de données, puisque les données sont écrites temporairement.

## Revendications

1. Dispositif de mémorisation temporaire de données pour transférer des données entre plusieurs équipement informatiques, ledit dispositif comportant des moyens de connexions (101) à un équipement comprenant des données à charger ou à décharger, les données étant enregistrées sur une mémoire volatile (106), le dispositif comportant un module d'alimentation (104) permettant de préserver l'état des données pendant une durée fixée Δt, une mémoire rémanente (105) stockant un ou plusieurs automates d'états (200, 400) dont les étapes sont exécutées par des moyens de contrôle (102) compris dans le dispositif, au moins un automate permettant l'activation du dispositif dans un mode parmi au moins deux disponibles : un mode « écriture seule » permettant l'écriture des données et interdisant la lecture de données sur la mémoire volatile (106), et un mode « lecture seule » permettant la lecture des données et interdisant l'écriture de données sur la mémoire volatile (106),
**caractérisé en ce que**:
les moyens de contrôle (102) déclenchent un changement de mode automatiquement après la connexion du dispositif à un équipement, le mode dans lequel se trouve le dispositif étant testé : si le mode testé est le mode lecture seule, le mode écriture seule est activé.

2. Dispositif de mémorisation temporaire de données selon la revendication 1, dans lequel les moyens de contrôle (102) sont configurés de sorte que si le mode testé est le mode écriture seule, le mode lecture seule est activé.

3. Dispositif de mémorisation temporaire de données selon la revendication 1, dans lequel au moins un automate (400) gère en plus un mode de lecture répétée, les moyens de contrôle (102) étant configurés de sorte que si le mode testé est le mode écriture seule, le mode de lecture répétée est activé, et si le mode testé est le mode de lecture répétée, le mode lecture répétée reste activé.

4. Dispositif selon l'une des revendications précédentes, **caractérisé en ce qu'**il comporte un minuteur permettant, après l'écoulement d'une durée Δt, de désactiver l'alimentation de la mémoire volatile (106).

5. Dispositif selon l'une des revendications précédentes, **caractérisé en ce qu'**il comporte un bouton de réinitialisation permettant de désactiver le module d'alimentation (104) sur simple action de l'utilisateur.

6. Dispositif selon l'une des revendications précédentes, **caractérisé en ce que** la mémoire rémanente (105) est réinscriptible, la modification de son état mémoire permettant de paramétrer la configuration du dispositif.

7. Dispositif selon l'une des revendications précédentes, **caractérisé en ce que** les moyens de connexions (101) comportent un connecteur USB.

8. Procédé de mise en oeuvre du dispositif selon la revendication 2, **caractérisé en ce qu'**au moins un automate (200, 400) comporte au moins les étapes suivantes :
■ le module d'alimentation (104) est mis en charge après la connexion du dispositif à un équipement;
■ au cours du fonctionnement en mode écriture, le module d'alimentation de la mémoire volatile (106) est activé,
■ au cours du fonctionnement en mode lecture, le module d'alimentation de la mémoire volatile (106) est désactivé.

9. Procédé de mise en oeuvre du dispositif selon la revendication 3, **caractérisé en ce qu'**il comporte au moins les étapes suivantes :
■ le module d'alimentation (104) est mis en charge après la connexion du dispositif à un équipement :
■ au cours du fonctionnement en mode écriture, le module d'alimentation de la mémoire volatile (106) est activé,
■ pendant le fonctionnement en mode lecture et/ou lecture répétée, le module d'alimentation de la mémoire volatile (106) reste activé.

## Claims

1. A device for temporarily storing data in order to transfer data between several items of computer equipment, said device comprising means for connection (101) to an item of equipment including data to be uploaded or downloaded, the data being stored in a volatile memory (106), the device comprising a supply module (104) allowing the status of the data to be maintained for a fixed duration Δt, a permanent memory (105) storing one or more status controllers (200, 400) the stages of which are executed by control means (102) included in the device, at least one controller allowing activation of the device in one mode selected from at least two available modes: a "write only" mode allowing data to be written and prohibiting data to be read on the volatile memory (106), and a "read only" mode allowing data to be read and prohibiting data to be written on the volatile memory (106), **characterised in that** the control means (102) automatically trigger, once the device has been connected to an item of equipment, a change of the mode which the device to be tested is in: if the tested mode is the read only mode, the write only mode is activated.

2. The device for temporarily storing data according to claim 1, wherein the control means (102) are configured so that if the tested mode is the write only mode, the read only mode is activated.

3. The device for temporarily storing data according to claim 1, wherein at least one controller (400) further controls a repeated read mode, the control means (102) being configured so that if the tested mode is the write only mode, the repeated read mode is activated, and if the tested mode is the repeated read mode, the repeated read mode remains activated.

4. The device according to any one of the previous claims, **characterised in that** it includes a timer allowing, after a duration Δt has elapsed, the supply to be deactivated from the volatile memory (106).

5. The device according to any one of the previous claims, **characterised in that** it includes a reset button allowing deactivation of the supply module (104) by a single user action.

6. The device according to any one of the previous claims, **characterised in that** the permanent memory (105) is re-writable, the modification of its memory status allowing the configuration of the device to be parameterised.

7. The device according to any one of the previous claims, **characterised in that** the connection means (101) include a USB connector.

8. A process for implementing the device according to claim 2, **characterised in that** at least one controller (200, 400) includes at least the following steps:
- charging the supply module (104) when the device is connected to an item of equipment;
- activating, while operating in write mode, the supply module of the volatile memory (106);
- deactivating, while operating in read mode, the supply module of the volatile memory (106.

9. A process for implementing the device according to claim 3, **characterised in that** it includes at least the following steps:
- charging the supply module (104) when the device is connected to an item of equipment;
- activating, while operating in write mode, the supply module of the volatile memory (106);
- keeping activated, while operating in read and/or repeated read mode, the supply module of the volatile memory (106).

## Patentansprüche

1. Vorrichtung zum vorübergehenden Speichern von Daten, um die Daten zwischen mehreren Computergeräten zu übertragen, wobei die Vorrichtung Mittel zum Anschließen (101) an ein Gerät umfasst, auf dem sich herauf oder herunter zu ladende Daten befinden, wobei die Daten in einem flüchtigen Speicher (106) gespeichert sind, wobei die Vorrichtung ein Versorgungsmodul (104) umfasst, mit dem der Zustand der zu konservierende Daten für eine feste Dauer Δt konserviert werden kann, wobei ein nichtflüchtiger Speicher (105) eine oder mehrere Zustandsmaschinen (200, 400) beinhaltet, deren Schritte von in der Vorrichtung enthaltenen Steuermitteln (102) ausgeführt werden, wobei wenigstens eine Maschine die Aktivierung der Vorrichtung in einem Modus zulässt, der ausgewählt ist aus wenigstens zwei verfügbare Modi: einem "Nur Schreiben" Modus, in dem Daten auf dem flüchtigen Speicher (106) geschrieben aber nicht gelesen werden können, und einen "Nur Lesen" Modus, in dem Daten auf dem flüchtigen Speicher (106) gelesen aber nicht geschrieben werden können, **dadurch gekennzeichnet, dass** die Steuermittel (102) beim Anschließen der Vorrichtung an ein Gerät automatisch einen Wechsel des Modus auslösen, in dem sich das getestete Gerät befindet: wenn der getestete Modus der Nur-Lesen-Modus ist, dann wird der Nur-Schreiben-Modus aktiviert.

2. Vorrichtung zum vorübergehenden Speichern von Daten nach Anspruch 1, wobei die Steuermittel (102) so konfiguriert sind, dass der Nur-Lesen-Modus aktiviert wird, wenn der getestete Modus der Nur-Schreiben-Modus ist.

3. Vorrichtung zum vorübergehenden Speichern von Daten nach Anspruch 1, wobei wenigstens eine Maschine (400) ferner einen wiederholten Lesemodus steuert, wobei die Steuermittel (102) so konfiguriert sind, dass der wiederholte Lesemodus aktiviert wird, wenn der getestete Modus der Nur-Schreiben-Modus ist, und dass der wiederholte Lesemodus aktiviert bleibt, wenn der getestete Modus der wiederholte Lesemodus ist.

4. Vorrichtung nach einem der vorherigen Ansprüche, **dadurch gekennzeichnet, dass** sie eine Zeituhr umfasst, die es zulässt, dass nach dem Verstreichen einer Dauer Δt die Versorgung des flüchtigen Speichers (106) deaktiviert werden kann.

5. Vorrichtung nach einem der vorherigen Ansprüche, **dadurch gekennzeichnet, dass** sie einen Rückstellknopf aufweiset, so dass das Versorgungsmodul (104) durch eine einfache Benutzeraktion deaktiviert werden kann.

6. Vorrichtung nach einem der vorherigen Ansprüche, **dadurch gekennzeichnet, dass** der nichtflüchtige Speicher (105) wiederbeschreibbar ist, wobei es die Modifikation seines Speicherzustands zulässt, die Konfiguration der Vorrichtung zu parametrisieren.

7. Vorrichtung nach einem der vorherigen Ansprüche, **dadurch gekennzeichnet, dass** die Anschlussmittel (101) einen USB-Verbinder umfassen.

8. Verfahren zum Betreiben der Vorrichtung nach Anspruch 2, **dadurch gekennzeichnet, dass** wenigstens eine Maschine (200, 400) wenigstens die folgenden Schritte beinhaltet:
- Laden des Versorgungsmoduls (104), wenn die Vorrichtung an ein Gerät angeschlossen ist;
- Aktivieren, beim Betrieb im Schreibmodus, des Versorgungsmoduls des flüchtigen Speichers (106);
- Deaktivieren, beim Betrieb im Lesemodus, des Versorgungsmoduls des flüchtigen Speichers (106).

9. Verfahren zum Betreiben der Vorrichtung nach Anspruch 3, **dadurch gekennzeichnet, dass** es wenigstens die folgenden Schritte beinhaltet:
- Laden des Versorgungsmoduls (104), wenn die Vorrichtung an einem Gerät angeschlossen ist;
- Aktivieren, beim Betrieb im Schreibmodus, des Versorgungsmoduls des flüchtigen Speichers (106);
- Aktiviertlassen, beim Betrieb im Lese- und/oder im wiederholten Lesemodus, des Versorgungsmoduls des flüchtigen Speichers (106).
